# FASCICULE DE BREVET EUROPEEN

(11) **EP 1 636 317 B1**
(45) Date de publication et mention de la délivrance du brevet: **11.04.2007**
(21) Numéro de dépôt: 04742882.6
(22) Date de dépôt: 04.06.2004
(51) Int. Cl.: C09D 5/00, C09D 5/08, C09D 5/44, C09D 163/00, C09D 175/00, C09D 17/00, C25D 13/06

(54) **ARTICLE RECOUVERT D UN REVETEMENT MONOCOUCHE RESISTANT A LA CORROSION ET/OU AU GRAVILLONNAGE**
VORRICHTUNG MIT EINER KORROSION- UND/ODER KIESBESTÄNDIGEN MONOSCHICHT
PART PROVIDED WITH A MONOLAYER CORROSION-RESISTANT AND/OR GRAVEL-RESISTANT COATING

(30) Priorité: 06.06.2003 FR 0306903
(43) Date de publication de la demande: 22.03.2006
(73) Titulaire: PPG INDUSTRIES FRANCE, 59770 Marly (FR)
(72) Inventeur: BESSON-DELABARRE, Catherine, F-59300 VALENCIENNES (FR); COURTECUISSE, Philippe, F-59990 ROMBIES (FR); MARTHE, Jean-Pierre, F-59990 ESTREUX (FR)
(74) Mandataire: Michelet, Alain
(86) Numéro de dépôt international: PCT/FR2004/050216
(87) Numéro de publication internationale: WO 2004/111137

(56) Documents cités:
- US-A- 5 382 607
- US-A1- 2002 136 911
- US-B1- 6 423 425

## Description

La présente invention concerne de manière générale un article revêtu, tel que par exemple une pièce de véhicule automobile, qui possède d'excellentes propriétés de résistance à la corrosion et/ou au gravillonnage.

Plus particulièrement, l'invention concerne un tel article dont les surfaces exposées à la corrosion et au gravillonnage sont recouvertes d'un revêtement monocouche de forte épaisseur

Sous l'action agressive de la corrosion et du gravillonnage, certaines pièces, notamment d'un véhicule automobile sont susceptibles de se dégrader. En particulier, les parties basses des véhicules, comme par exemple le berceau moteur ou le support de radiateur, sont très sensibles et nécessitent d'être protégées.

Il est connu de l'homme du métier de protéger ces parties basses des véhicules automobiles, par des revêtements classiques déposés par électrodéposition. Ces revêtements présentent généralement une épaisseur inférieure à 50 µm.

Si de tels revêtements ont en général une bonne résistance à la corrosion, ils présentent l'inconvénient de n'être pas suffisamment résistant au gravillonnage.

Les revêtements galvanisés sont connus de l'homme de l'art pour pallier ces inconvénients. Mais ils sont excessivement chers et posent des problèmes pour l'environnement.

On a également proposé des compositions électrodéposables à base de résine cationique, pour réaliser des revêtements sur des pièces métalliques pour les protéger de la corrosion et du gravillonnage.

Ainsi, le brevet US 6,423,425 décrit un procédé pour déposer sur un substrat conducteur, typiquement une pièce de véhicule automobile, une composition à base de polyuréthane, polyurée ou poly(uréthane-urée). Toutefois, les revêtements obtenus à partir de ces compositions ne permettent pas d'obtenir des épaisseurs de revêtements supérieures à 50 µm, et donc d'obtenir des propriétés de résistance à la corrosion et au gravillonnage suffisantes pour des parties basses de véhicules automobile.

Il subsiste donc le besoin d'un système de revêtement qui permette de conférer de bonnes propriétés de résistance à la corrosion et au gravillonnage à des pièces de véhicules automobiles, tout en remédiant aux inconvénients de l'art antérieur.

La demanderesse a découvert de manière surprenante qu'un revêtement monocouche à base de résine cationique et d'alkylamide, de forte épaisseur (>50 µm), électrodéposable sur un susbtrat conducteur, par exemple une pièce métallique, notamment d'automobile, confère aux produits obtenus les propriétés désirées.

La présente invention a donc pour objet un article comprenant un substrat conducteur recouvert, au moins en partie, d'un revêtement monocouche, continu, d'épaisseur uniforme d'au moins 50 µm, résultant de la réticulation d'une composition de revêtement réticulable comprenant :
- une pâte pigmentaire comprenant au moins un liant de broyage, au moins un pigment, et, facultativement, au moins une charge, le pigment et la charge éventuelle, étant dispersés dans la liant de broyage, et
- un matériau polymérique contenant au moins une résine cationique choisie parmi les résines dérivées de résines époxy ; les résines polyuréthanes et/ou polyurées et/ou poly(uréthane-urée) ; et les résines acryliques, au moins un alkyl(C₆-C₁₂)amide, de préférence linéaire, et au moins un agent de réticulation.

De préférence, l'alkylamide est un alkyl(C₈-C₁₀)amide. De préférence l'alkylamide est un mélange 50/50 en poids de N,N-diméthyl octanamide et de N,N-diméthyl décanamide.

La couche de revêtement de l'article selon l'invention a une épaisseur uniforme et continue sur toute la surface revêtue et confère à l'article ainsi revêtu d'excellentes propriétés de résistance à la corrosion et au gravillonnage.

De préférence, l'épaisseur de la couche de revêtement varie de 50 µm à 200 µm, et mieux de 100 à 180 µm.

L'épaisseur de la couche de revêtement est mesurée de façon classique avec un appareil de mesure d'épaisseur, tel que par exemple ceux commercialisés sous les dénominations commerciales Fisherscope^{®} ou Permascope^{®}.

A titre de charges utilisables dans la pâte pigmentaire de la présente invention, on peut citer le carbonate de baryum, le sulfate de baryum, le kaolin, le carbonate de calcium, le silicate d'aluminium, la silice, le carbonate de magnésium, le silicate de magnésium, et leurs mélanges.

Une charge particulièrement préférée est la silice, et notamment la silice cristalline.

Lorsque la charge est constituée par de la silice, il est possible de fabriquer une couche de revêtement ayant une épaisseur égale ou supérieure à 150 µm, de préférence égale ou supérieure à 180 µm et mieux de l'ordre de 200 µm, si la résine cationique du matériau polymérique est choisie parmi les résines dérivée de résines époxy et les résines polyuréthanes. Une telle couche de revêtement possède d'excellentes propriétés de résistance à la corrosion et de résistance au gravillonnage.

Dans un mode de réalisation particulièrement préféré de l'invention, la résine cationique du matériau polymérique est choisie parmi les résines dérivées de résines époxy et ledit matériau polymérique contient également un agent flexibilisant.

Par agent flexibilisant, on entend au sens de la présente demande, tout composé qui, introduit dans le réseau de la résine époxy, abaisse la température de transition vitreuse du polyépoxyde.

Une classe d'agents flexibilisants utilisables selon l'invention comprend les polyoxyalkylène polyamines, et de préférence les polyoxypropylène polyamines de masse moléculaire variant de 340 à 2000, de préférence de 400 à 2000, et mieux d'environ 2000. On peut notamment citer les polyoxyalkylène polyamines décrits dans le brevet US 4,615,779. Comme exemples de polyoxyalkylène polyamines, on peut citer ceux commercialisés sous la dénomination JEFFAMINE^{®}.

De manière avantageuse, l'agent flexibilisant est présent à raison de 10 à 20 % en poids, et de préférence 15 à 20% en poids par rapport au poids total du matériau polymérique.

A titres d'exemples de résines cationiques utilisables dans la composition de revêtement de l'invention, on peut citer les résines dérivées de polyépoxydes, de préférence de polyépoxydes possédant une équivalence en 1,2-époxy supérieure à 1, de préférence d'environ 2. Autrement dit, le nombre moyen de groupes 1,2-époxy par molécule doit être supérieur à 1, de préférence d'environ 2

Le polyépoxyde peut être l'un quelconque des époxydes bien connus. Des exemples de ces polyépoxydes ont été décrits par exemple dans les brevets US 2,467,171, 2,615,007, 2,716,123, 3,030,336, 3,053,855 et 3,075,999.

Les polyépoxydes préférés sont les éthers polyglycidyliques de polyols cycliques, et en particulier les éthers polyglycidyliques de polyphénols comme le bisphénol A.

Ceux-ci peuvent être par exemple préparés par éthérification d'un polyphénol avec de l'épichlorhydrine ou de la dichlorhydrine, en présence d'un alcali. Le composé phénolique peut être le bis (4-hydroxylphényl)-2,2-propane, la 4,4'-dihydroxybenzophénone, le bis (4-hydroxy-phényl)-1,1-éthane, le bis (4-hydroxyphényl)-1,1-isobutane, le bis(4-hydroxy-tert-butylphényl-)2,2-propane, le bis(2-hydroxy-naphtyl)méthane, le 1,5-hydroxynaphtalène ou des composés similaires.

Conviennent également les éthers polyglycidiques de polyalcools similaires dérivés de polyalcools cycliques tels que le 1,2-cyclohexanediol, le 1,4-cyclohexanediol, le 1,2-bis(hydroxyméthyl) cyclohexane, le 1,3-bis(hydroxyméthyl)cyclohexane et le bisphénol A hydrogéné.

Les polyépoxydes utilisables selon l'invention présentent en général un poids moléculaire moyen d'au moins 200 et de préférence de 200 à 2000, et mieux d'environ 340 à 2000.

La chaîne des polyépoxydes utilisables selon l'invention peut également être prolongée à l'aide d'un prolongateur de chaîne, notamment avec un polyéther polyol, un polyester polyol, ou un diacide, de préférence en C₁₀.

Des exemples de polyetherpolyols sont décrits dans les brevets US 4,468,307.

Des exemples de polyester polyols sont décrits dans US 4,148,772 .

A titres d'exemples de résines cationiques utilisables dans la composition de revêtement de l'invention, on peut aussi citer les résines polyuréthanes et/ou polyurées et/ou poly(uréthane-urée) sont les produits de réaction d'un polyisocyanate et d'un composé polymérique contenant un hydrogène actif.

De préférence, le composé polymérique contenant un hydrogène actif est choisi parmi les polyoxyalkylèneétherpolyols, les polyoxyalkylènepolyolpolyamines, et leurs mélanges.

Des exemples de résines polyuréthanes et/ou polyurées et/ou poly(uréthane-urée) sont décrits dans le brevet US 6,423,425.

Par agent de réticulation, on entend, au sens de la présente invention, un composé ou un mélange de composés qui permet l'obtention d'un réseau final tridimensionnel.

On peut notamment citer à titre d'agent de réticulation utilisable selon l'invention les isocyanates bloqués, et en particulier ceux décrits dans le brevet US 4,615,770.

L'agent de réticulation représente généralement 20 à 55 % en poids du poids total du matériau polymérique, et de préférence 30 à 50% en poids.

De préférence, comme cela est bien connu, le matériau polymérique de l'invention peut également comprendre un catalyseur de réticulation. Ces catalyseurs sont bien connus dans la technique. Comme exemples de catalyseur de réticulation utilisables selon l'invention, on peut citer les organoétains, et notamment l'oxyde de dibutylétain (DBTO). Les proportions de catalyseur de réticulation sont celles classiquement utilisées, comme par exemple 0,1 à 4 % en poids par rapport au poids total du matériau polymérique (sec).

Les pâtes pigmentaires de la composition de revêtement de l'invention sont généralement obtenues par broyage ou dispersion d'au moins un pigment, et préférenciellement d'au moins une charge, dans un liant de broyage selon une méthode bien connue de l'homme de l'art.

Le broyage s'effectue habituellement au moyen de broyeurs à billes, de broyeurs à sable, de dissolveurs Cowles, d'appareillages réalisant un frottement ou une usure en continu, et similaires, jusqu'à ce que le pigment et/ou la charge ait été amenée à la taille désirée et ait été de préférence mouillée ou dispersé par le liant de broyage. Après broyage, la taille de particule du pigment et/ou de la charge doit se situer dans la gamme de 10 microns ou moins et être aussi faible que possible. D'une manière générale, on utilise habituellement un calibre de finesse de broyage Hegman d'environ 6 à 8.

Le broyage s'effectue de préférence dans une dispersion aqueuse du liant de broyage. La quantité d'eau présente dans le milieu de broyage aqueux doit être suffisante pour produire une phase aqueuse continue. Le milieu de broyage aqueux présente habituellement un taux de solides total de 30 à 70 pour cent. L'utilisation d'eau supplémentaire réduit purement et simplement la capacité effective du broyeur et, bien que l'on puisse utiliser moins d'eau, la viscosité plus élevée qui en résulte peut créer des difficultés dans certains cas.

Les pigments pouvant être mis en oeuvre dans l'invention sont bien connus de l'homme de l'art, et peuvent être tous pigments minéraux ou organiques, de préférence des pigments blancs, des pigments noirs, et leurs mélanges.

Lorsque le pigment ou les pigments de la pâte pigmentaire sont des pigments minéraux ils représentent en général 25 à 50 % en poids, et de préférence 30 à 40 % en poids du poids total de la pâte pigmentaire.

Lorsque le pigment ou les pigments de la pâte pigmentaire sont des pigments organiques ils représentent généralement 1 à 5 % en poids, et de préférence 2 à 3 % en poids du poids total de la pâte pigmentaire.

Généralement, le dioxyde de titane est le pigment blanc unique ou principal.

Par liant de broyage (ou liant de broyage), on entend au sens de la présente demande, un véhicule pour les pigments qui agit comme un agent de dispersion en formant une pâte.

A titre de liant de broyage utilisable selon la présente invention, on peut citer les liants de broyage constitués d'une matière contenant un groupement ammonium quaternaire, que l'on obtient par la réaction :
(i) d'un monoépoxyde ou d'un polyépoxyde, et
(ii) d'une amine
dans des conditions qui suffisent à engendrer le groupement ammonium quaternaire.

Des exemples de liants de broyage sont décrits dans les brevets EP 0107089 B1, EP 0107098 B1 et US 4,485,254.

A titre de liant de broyage utilisable selon la présente invention, on peut également citer les liants de broyage constitués d'une résine cationique dérivée d'une résine époxy et contenant des groupes sulfonium ternaires et des groupes alkylphénoxydes, tels que par exemple les liants de broyage décrits dans le brevet US 4,715,898.

Enfin, à titre de liant de broyage utilisable selon la présente invention, on peut encore citer les liants de broyage constitués d' une résine cationique dérivée d'une résine époxy et contenant des groupes sulfonium ternaires et des groupes ammonium quaternaires, tels que ceux décrits dans le brevet EP 0336599 B1.

Généralement, le liant de broyage représente 15 à 30 % en poids, de préférence 20 à 25 % en poids du poids total de la pâte pigmentaire.

De préférence, le rapport pondéral de la pâte pigmentaire au matériau polymérique P/L varie de 1 à 4, de préférence de 2,22 à 2,28.

Outre le liant de broyage, le (ou les) pigment(s), et la (ou les) charge(s), la pâte pigmentaire de la composition de revêtement de l'invention peut également contenir des constituants facultatifs, tels que plastifiants, mouillants, agents tensioactifs ou anti-mousses.

Par un aperçu général sur le broyage des pigments et la formulation des pâtes pigmentaires, on pourra se référer à :
D.H. PARKER, Principles of surface Coating Technology,
Interscience Publishers, New York (1965);
R.L. Yates, Electropainting, Rober Draper Ltd,
Teddington, England (1966);
H.F. Payne, Organic Coating Technology, vol.2,
Wiley and Sons, new York, (1961).

Le substrat conducteur utilisable selon l'invention peut être un substrat en métal tel que l'acier, l'aluminium, le cuivre, le magnésium ou des métaux analogues, mais englobe aussi des matières plastiques métallisées et des matières conductrices recouvertes de carbone.

De préférence le substrat métallique est un substrat en acier, l'acier pouvant être un acier phosphaté ou électrozingué.

En particulier, le substrat conducteur est une pièce de véhicule automobile exposée au gravillonnage, telle que par exemple un berceau moteur ou un support de radiateur.

La présente invention a également pour objet un mélange prépréparé comprenant la pâte pigmentaire et le matériau polymérique tels que définis précédemment.

La présente invention concerne aussi un bain d'électrophorèse qui comprend le mélange prépréparé tel que défini ci-dessus, et de l'eau

Enfin, la présente invention a également pour objet un procédé pour fabriquer un article tel que défini ci-dessus, comprenant les étapes suivantes :
- (a) préparer un bain d'une composition de revêtement réticulable comprenant :
   - une pâte pigmentaire comprenant au moins un liant de broyage, au moins un pigment, et facultativement au moins une charge,
   - un matériau polymérique contenant au moins une résine cationique choisie parmi les résines époxy, les résines polyuréthanes, et les résines acryliques, et au moins un alkyl(C₆-C₁₂)amide, et
   - un milieu aqueux comprenant de l'eau, et de manière facultative un solvant,
- (b) obtenir un substrat conducteur,
- (c) disposer le substrat dans le bain,
- (d) effectuer par électrophorèse le dépôt d' une couche de revêtement, d'épaisseur au moins égale à 50 µm, et
- (e) réticuler la couche de revêtement déposée.

Le procédé de l'invention peut comporter, une étape (d') d'enlèvement du substrat du bain avant l'étape de réticulation (e).

En outre, le procédé de l'invention peut comporter, entre l'étape d'enlèvement (d') et l'étape de réticulation (e), une étape de rinçage du substrat (d"), groupe époxyde tel que précédemment décrit, avec une amine secondaire, en présence d'un solvant organique, pour former l'amine tertiaire.

On peut charger le matériau polymérique dans le bain d'électrodéposition d'une façon bien connue de l'homme de l'art, l'important étant que l'addition ne provoque pas l'instabilité du bain. L'addition peut se faire de façon continue ou par fractions, ainsi qu'il est bien connu dans cette technique.

La température du bain est généralement comprise entre 20 et 35°C, et de préférence de 25 à 30°C. Le bain est généralement agité.

La concentration des différents constituants du bain d'électrodéposition (autres que l'eau) dans le milieu aqueux dépend des paramètre opératoires à appliquer, et peut varier dans de larges proportions. Mais de préférence, le bain de composition de revêtement réticulable comprend :
- 3 à 10 % en poids de pâte pigmentaire, de préférence 5 à 8 % en poids, et mieux environ 6 % en poids par rapport au poids total du bain,
- 30 à 40 % en poids de matériau polymérique par rapport au poids total du bain,
- le reste étant de l'eau.

Outre l'eau, le milieu aqueux peut, de manière facultative, contenir un solvant de coalescence. L'utilisation d'un solvant de coalescence peut, dans certains cas, améliorer l'aspect de la pellicule déposée. Ces solvants comprennent des produits hydrocarbonés, des alcools, des esters, des éthers et des cétones. Les solvants de coalescence préférés comprennent des mono-alcools, des glycols et des polyols, ainsi que des cétones et d'autres alcools. Des solvants de coalescence spécifiques sont l'isopropanol, le butanol, l'isophorone, la 4-méthoxyméthyl-2-pentanone, l'éthylène- et le propylène-glycol, les éthers monoéthylique, monobutylique et monohexylique d'éthylène-glycol et le 2-éthyl-hexanol. La quantité du solvant de coalescence n'est pas particulièrement rigoureuse et elle est généralement comprise entre environ 0,01 et 40 % en poids par rapport au poids total du milieu aqueux.

Dans certains cas, on incorpore également dans le bain, si on le désire, divers adjuvants tels que des agents tensio-actifs ou de mouillants.

Lors de la mise en oeuvre de la présente invention, on applique généralement des rapports pondéraux du (ou des) pigments au liant total du bain variant de 0,05 à 0,3, de préférence de 0,1 à 0,2, le liant total du bain étant constitué par la somme du matériau polymérique et du liant de broyage.

Les autres adjuvants signalés précédemment sont présents dans la dispersion à raison de 0,01 à 3 % en poids par rapport au poids total des solides de résine.

Dans le procédé d'électrodéposition de l'invention, on place, de manière classique, le bain en contact avec une anode électriquement conductrice et une cathode électriquement conductrice, la surface à enduire constituant la cathode. Alors qu'il y a contact avec la dispersion aqueuse, une pellicule adhérente de la composition de revêtement se dépose sur la cathode lorsqu'on applique un potentiel entre les électrodes.

Les conditions dans lesquelles on conduit l'électrodéposition sont en général similaires à celles appliquées lors du dépôt électrolytique d'autres types de revêtements. La tension appliquée peut être modifiée et elle peut être, par exemple, aussi faible que 1 volt ou aussi élevée que plusieurs milliers de volts, mais en pratique elle est comprise entre 50 et 500 volts. La densité de courant est habituellement entre environ 0,12 et 1,5 ampère/dm² et elle a tendance à décroître au cours de l'électrodéposition, ce qui indique la formation d'une pellicule auto-isolante.

Comme cela a déjà été mentionné précédemment, le procédé selon la présente invention est applicable à n'importe quel substrat conducteur, en particulier des métaux tels que l'acier, l'aluminium, le cuivre, le magnésium et des métaux analogues, mais englobe aussi des matières plastiques métallisées et des matières conductrices recouvertes de carbone.

Après dépôt, la réticulation de la couche de revêtement s'effectue par chauffage en utilisant toute méthode classique, par exemple par chauffage dans des fours thermiques ou électriques, des étuves, ou à l'aide de rampes de lampes à infra-rouge.

La température de chauffage est généralement comprise entre 140 et 200°C, de préférence entre 150 et 180°C. La durée de chauffage varie de 2 minutes à 30 minutes en fonction du type de chauffage envisagé. Par exemple, dans le cas d'un chauffage en étuve, la durée de cuisson est de 30 minutes au total, y compris la montée en température et le maintien à la température de chauffage.

Après réticulation, on obtient une couche de revêtement réticulée d'épaisseur uniforme et continue sur toute la surface revêtue.

Les exemples suivants illustrent l'invention sans en limiter la portée. Sauf spécification contraire, tous les pourcentages et parties dans les exemples qui suivent, ainsi que tout au long de la description, sont exprimés en poids.

### 1. Matières premières

### Résine polyuréthane

On utilise la résine polyuréthane obtenue à l'exemple 4 du brevet US 6,423,425.

On mélange les produits suivants dans un flacon: l'isophoronediisocyanate (1200,6 g ; 10,82 eq.), méthylisobutyl cétone (520,2 g), et dibutyltindilaurate (0,6 g). Puis on chauffe le mélange à 30°C. On ajoute ensuite du triméthylolpropane (125,1 g ; 2,80 eq). Après cette addition, la température du mélange attein 73°C. On ajoute ensuite au mélange réactionnel du Caprolactam (382,9 g ; 3,38 eq.) et du MIBK (40 g). La température du mélange est maintenue à 85°C, jusqu'à obtention d'un isocyanate (equivalent en poids de NCO de 490). On ajoute ensuite du TERETHANE. R.T.M. 650, du polytétrahydrofurane den poids moléculaire 650 commercialisé par DuPont sous la dénomination commerciale PolyTHF^{®} (707,9 g ; 2,21 eq), et du MIBK (275,7 g). Cette addition est réalisée à une vitesse telle que la température du mélange réactionnel est maintenue au-dessous de 90°C. Après l'addition, la température du mélange diminue jusqu'à 65°C. A 65°C, on ajoute alors les produits suivants : JEFFAMINE.RTM.D-2000 (437 g ; 0,44 eq) et MIBK (40 g) ; et on maintient le mélange pendant 15 minutes. On obtient alors un équivalent en poids de NCO de 1974. On ajoute alors de la diéthanolamine (87 g ; 0,83 eq) et 125 g d'aminopropyldiéthanolamine (125,2 g ; 0,77 eq). La solution obtenue est maintenue à 80°C jusqu'à disparition complète des NCO (détermination par analyse IR). Après consommation des isocyanates, on ajoute 31 g de SURFYNOL.RTM.GA, 30,7 g de tensioactif et 40 g de MIBK et la solution obtenue est mélangée pendant 15 minutes. La résine obtenue est alors dispersée dans l'eau déminéralisée (1666 g) et de l'acide diméthylolpropionique (82,9 g ; 0,62 eq). La résine est de nouveau dispersée dans de l'eau déionisée (3303 g) pour obtenir une dispersion finale contenant 36,5 % de particules solides. Puis la dispersion est mise sous vide à 60°C pour enlever le solvant.

### Résines époxy

On chauffe à 80°C 695 g d'Epikote 880 (commercialisé par Resolution Performance Products) puis on ajoute 96 g de néopentyl glycol, 224 g de Macol 98 (commercialisé par BASF Surfactants), et 53 g de méthylisobutyl cétone. On chauffe à 138°C et on ajoute 5 g de benzyldiméthylamine. On chauffe à 165°C, et on maintient à cette température jusqu'à obtention d'un poids équivalent d'époxy compris entre 1550 et 1580. On ajoute 123 g de xylène et on refroidit à 135°C pour maintenir cette température jusqu'à un poids équivalent d'époxy compris entre 1620 et 1640. On ajoute rapidement 63 g d'une solution à 73 % dans la méthylisobutyl cétone de la dicétimine obtenue par condensation entre une mole de diéthylène triamine et deux moles de méthylisobutyl cétone puis 34 g de N-méthyléthanolamine puis 30 g de méthylisobutyl cétone. On maintient 30 minutes à 150°C puis on refroidit à 135°C. On élimine 173 g de solvant par distillation puis on refroidit à 115°C. On ajoute 1196 g de la solution d'agent de réticulation décrite ci-dessus et 125 g de phénoxypropanol puis on refroidit à 80°C et on maintient une heure à cette température. On ajoute un mélange de 44 g d'acide lactique à 88 % et 1075 g d'eau. On homogénéise pendant 30 minutes puis on ajoute progressivement 1458 g tout en refroidissant. On ajoute encore 1010 g d'eau puis on élimine les solvants organiques par distillation à 60°C, sous pression réduite, de 1010 g. On obtient une dispersion aqueuse ayant un extrait sec d'environ 39 %.

### Agent de réticulation

On chauffe à 50°C un mélange de 1993 g de butyl glycol et 1283 g de propylène glycol. On ajoute, en plusieurs heures, de manière à ne pas dépasser 100°C, 4466 g de Papi 2940 (crude MDI de DOW Chemical). A la fin de l'ajout, on maintient encore 30 minutes à 100°C. On dilue avec 2058 g de méthylisobutyl cétone pour obtenir 9800 g d' une solution à 79 % d'extrait sec théorique.

### Agent flexibilisant

Polyoxypropylène polyamine tel que décrit à l'exemple 4 du brevet US 4,615,779.

### Alkylamide

mélange 50/50 en poids de N,N-diméthyl octanamide et de N,N-diméthyl décanamide, commercialisé sous la dénomination commerciale HALLCOMID M8.10^{®} par la société LAVOLLEE CHIMIE S.A.

### Pâte pigmentaire

caractérisée par :
- un rapport P/L de 2,27
- un pourcentage massique d'extrait sec de pâte de 44,75 %
- un pourcentage massique de DBTO de 2,91 % en poids,
- un liant de broyage contenant un groupement ammonium quaternaire tel que défini à l'exemple 4 du brevet US 6,423,425

### composition de la pâte pigmentaire :

- liant de broyage : 23,57 % en poids par rapport au poids total de la pâte pigmentaire (extrait sec de 12,49 %),
- eau déminéralisée : 38,85 % en poids par rapport au poids total de la pâte pigmentaire,
- catalyseur sous forme de pâte : 9,4 % en poids par rapport au poids total de la pâte pigmentaire (extrait sec de 1,09 %),
- silice cristalline : 26,06 % en poids par rapport au poids total de la pâte pigmentaire,
- noir de carbone : 2,1 % en poids par rapport au poids total de la pâte pigmentaire.

### composition de la pâte de catalyseur :

- liant de broyage : 21,94 % en poids par rapport au poids total de la pâte pigmentaire (extrait sec de 11,63 %),
- eau déminéralisée : 47,14 % en poids par rapport au poids total de la pâte pigmentaire,
- DBTO : 30,92 % en poids par rapport au poids total de la pâte pigmentaire.

La pâte de catalyseur a un rapport P/L de 2,66 et un pourcentage massique d'extrait sec de pâte de 42,55 %.

### 2. Méthodes de mesure

### La résistance au gravillonnage

La résistance au gravillonnage des revêtement obtenus après électrodéposition d'une couche de revêtement est déterminée en réalisant des essais de résistance au gravillonnage par projection de grenailles suivant la norme RENAULT D24 1702.

Pour cette détermination, des plaquettes de dimension 90 mm x 190 mm découpées dans des tôles d'acier d'épaisseur 0,7 mm ont été revêtues, selon le procédé de l'invention, d'une couche de revêtement, à partir des bains d'électrodéposition à base de résine époxy et à base de résine polyuréthane

On détermine le nombre d'impacts sur la surface recouverte des plaquettes.

### EXEMPLE 1

### Bain à base de résine polyuréthane

caractérisée par un premier bain contenant :

| | |
|---|---|
| - 6,41 % en poids de pâte pigmentaire | |
| - 31,35 % en poids de résine | |
| - 62,25 % en poids d'eau | |
| | 100 % |

Le deuxième bain est obtenue à partir du premier bain par addition de 2 % en poids d'HALLCOMID M8.10^{®}

### Conditions d'électrodéposition

- rapport pondéral des pigments au liant total (P/B) de 0,15 ;
- 15 % d'extrait sec en poids par rapport au poids du bain, l'extrait sec comprenant les pigments, la résine et l'HALLCOMID M8.10^{®} ;
- durée du dépôt : 2 minutes ;
- tension d'application : 275 V ;
- Conditions de réticulation : chauffage en étuve à 180°C (température de la plaquette) pendant 20 minutes.

On obtient une épaisseur sèche de revêtement (c'est-à-dire après réticulation) de 150 µm.

### Résultats des mesures de résistance au gravillonnage

- 0 impact

### EXEMPLE 2

### Bain à base de résine époxy

caractérisée par un premier bain contenant :

| | |
|---|---|
| - 8,4 % en poids de pâte pigmentaire | |
| - 41,2 % en poids de résine | |
| - 50,36 % en poids d'eau | |
| | 100 % |

Le deuxième bain est obtenue à partir du premier bain par addition de 2 % en poids d'HALLCOMID M8.10^{®}.

### Conditions d'électrodéposition

- rapport pondéral des pigments au liant total (P/B) de 0,15 ;
- 20 % d'extrait sec en poids par rapport au poids du bain, l'extrait sec comprenant les pigments, la résine et l'HALLCOMID M8.10^{®};
- température de bain : 25°C ;
- durée du dépôt : 5 minutes ;
- tension d'application : 275 V ;
- Conditions de réticulation : chauffage en étuve à 180°C pendant 20 minutes.

On obtient une épaisseur sèche de revêtement (c'est-à-dire après réticulation) de 200 µm.

### Résultats des mesures de résistance au gravillonnage

- 3 à 4 impacts

## Revendications

1. Article comprenant un substrat conducteur, **caractérisé en ce qu'**il est recouvert ,au moins en partie, d'un revêtement monocouche, continu, d'épaisseur uniforme d'au moins 50 µm, résultant de la réticulation d'une composition de revêtement réticulable comprenant :
• une pâte pigmentaire comprenant au moins un liant de broyage, au moins un pigment, et, facultativement, au moins une charge, le pigment et la charge éventuelle, étant dispersés dans la liant de broyage, et
• un matériau polymérique contenant au moins une résine cationique choisie parmi les résines époxy ; les résines polyuréthanes et/ou polyurées et/ou poly(uréthane-urée) ; et les résines acryliques, au moins un alkyl(C₆-C₁₂)amide, de préférence linéaire, et au moins un agent de réticulation.

2. Article selon la revendication 1, **caractérisé en ce que** l'alkylamide est un alkyl(en C₈-C₁₀)amide.

3. Article selon la revendication 1 ou 2, **caractérisé en ce que** l'alkylamide est un mélange 50/50 en poids de N,N-diméthyl octanamide et de N,N-diméthyl décanamide.

4. Article selon l'une quelconque des revendications précédentes, **caractérisé en ce que** l'épaisseur de la couche de revêtement varie de 50 µm à 200 µm.

5. Article selon la revendication 4, **caractérisé en ce que** l'épaisseur de la couche de revêtement varie de 100 µm à 180 µm.

6. Article selon l'une quelconque des revendications précédentes, **caractérisé en ce que** la charge contenue dans la pâte pigmentaire est choisie parmi le carbonate de baryum, le sulfate de baryum, le kaolin, le carbonate de calcium, le silicate d'aluminium, la silice, le carbonate de magnésium, le silicate de magnésium, et leurs mélanges.

7. Article selon l'une des revendications 1 à 3, **caractérisé en ce que** la couche de revêtement a une épaisseur égale ou supérieure à 150 µm, la charge est une silice, et la résine cationique du matériau polymérique est choisie parmi les résines époxy et les résines polyuréthanes.

8. Article selon la revendication 7, **caractérisé en ce que** la silice est cristalline.

9. Article selon la revendication 7 ou 8, **caractérisé en ce que** la résine cationique du matériau polymérique est choisie parmi les résines époxy et ledit matériau polymérique contient également un agent flexibilisant.

10. Article selon l'une des revendications 7 à 9, **caractérisé en ce que** l'agent flexibilisant est présent à raison de 10 à 20 % en poids, et de préférence 15 à 20% en poids par rapport au poids total du matériau polymérique.

11. Article selon l'une quelconque des revendications précédentes, **caractérisé en ce que** les résines époxy sont des polyépoxydes, et de préférence des polyépoxydes ayant une équivalence en 1,2-époxyde supérieure à un, et de préférence d'environ 2.

12. Article selon la revendication 11, **caractérisé en ce que** les polyépoxydes sont des éthers polyglycidyliques de polyols cycliques.

13. Article selon la revendication 11, **caractérisé en ce que** les polyépoxydes sont des éthers polyglycidyliques de polyphénols ou des éthers polyglycidiques de polyalcools dérivés de polyalcools cycliques.

14. Article selon l'une des revendications 11 à 13, **caractérisé en ce que** les polyépoxydes présentent un poids moléculaire moyen d'au moins 200, de préférence de 200 à 2000, et mieux d'environ 340 à 2000.

15. Article selon l'une des revendications 11 à 14, **caractérisé en ce que** la chaîne des polyépoxydes est prolongée à l'aide d'un prolongateur de chaîne.

16. Article selon l'une quelconque des revendications précédentes, **caractérisé en ce que** les résines polyuréthanes et/ou polyurées et/ou poly(uréthane-urée) sont les produits de réaction d'un polyisocyanate et d'un composé polymérique contenant un hydrogène actif.

17. Article selon la revendication 16, **caractérisé en ce que** le composé polymérique contenant un hydrogène actif est choisi parmi les polyoxyalkylène éther polyols, les polyoxyalkylènepolyolyamines, et leurs mélanges.

18. Article selon l'une quelconque des revendications précédentes, **caractérisé en ce que** le pigment ou les pigments de la pâte pigmentaire sont choisis parmi les pigments minéraux et organiques, de préférence parmi les pigments blancs et les pigments noirs, et leurs mélanges.

19. Article selon la revendication 18, **caractérisé en ce que** le pigment ou les pigments de la pâte pigmentaire sont des pigments minéraux et représentent 25 à 50 % en poids, et de préférence 30 à 40 % en poids du poids total de la pâte pigmentaire.

20. Article selon la revendication 18, **caractérisé en ce que** le pigment ou les pigments de la pâte pigmentaire sont des pigments organiques et représentent 1 à 5 % en poids, et de préférence 2 à 3 % en poids du poids total de la pâte pigmentaire.

21. Article selon l'une quelconque des revendications précédentes, **caractérisé en ce que** le liant de broyage de la pâte pigmentaire est une matière contenant un groupement ammonium quaternaire, que l'on obtient par la réaction :
(i) d'un monoépoxyde ou un polyépoxyde sur
(ii) une amine
dans des conditions qui suffisent à engendrer le groupement ammonium quaternaire.

22. Article selon l'une quelconque des revendications 1 à 21, **caractérisé en ce que** le liant de broyage de la pâte pigmentaire est une résine cationique dérivée d'une résine époxy et contenant des groupes sulfonium ternaires et des groupes alkylphénoxydes.

23. Article selon l'une quelconque des revendications 1 à 21, **caractérisé en ce que** le liant de broyage de la pâte pigmentaire est une résine cationique dérivée d'une résine époxy et contenant des groupes sulfonium ternaires et des groupes ammonium quaternaires.

24. Article selon l'une quelconque des revendications précédentes, **caractérisé en ce que** le liant de broyage représente 15 à 30 % en poids, de préférence 20 à 25 % en poids du poids total de la pâte pigmentaire.

25. Article selon l'une quelconque des revendications précédentes, **caractérisé en ce que** le rapport pondéral de la pâte pigmentaire au matériau polymérique varie de 1 à 4, de préférence de 2,22 à 2,28.

26. Article selon l'une quelconque des revendications précédentes, **caractérisé en ce que** le substrat conducteur est un substrat métallique.

27. Article selon la revendication 26, **caractérisé en ce que** le substrat métallique est un substrat en acier, l'acier pouvant être nu, phosphaté ou électrozingué.

28. Article selon l'une quelconque des revendications précédentes, **caractérisé en ce que** le substrat est une pièce de véhicule automobile exposée au gravillonnage.

29. Article selon la revendication 28, **caractérisé en ce que** le substrat est un berceau moteur ou un support de radiateur.

30. Mélange prépréparé comprenant la pâte pigmentaire et le matériau polymérique tels que définis selon l'une quelconque des revendications 1 à 29.

31. Bain d'électrophorèse qui comprend le mélange prépréparé tel que défini à la revendication 29 et de l'eau.

32. Procédé pour fabriquer un article tel que défini selon l'une quelconque des revendications 1 à 29, **caractérisé en ce qu'**il comprend les étapes suivantes :
- (a) préparer un bain d'une composition de revêtement réticulable comprenant :
• une pâte pigmentaire comprenant au moins un liant de broyage, au moins un pigment, et facultativement au moins une charge,
• un matériau polymérique contenant au moins une résine cationique choisie parmi les résines époxy, les résines polyuréthanes, et les résines acryliques, et au moins un alkyl(C₆-C₁₂)amide, et
• un milieu aqueux comprenant de l'eau, et de manière facultative un solvant,
- (b) obtenir un substrat conducteur,
- (c) déposer le substrat dans le bain,
- (d) effectuer par électrophorèse le dépôt d'une couche de revêtement, d'épaisseur au moins égale à 50 µm, et
- (e) réticuler la couche de revêtement déposée.

33. Procédé selon la revendication 32, **caractérisé en ce que** le bain de composition de revêtement réticulable comprend :
• 3 à 10 % en poids de pâte pigmentaire, de préférence 5 à 8 % en poids, et mieux environ 6 % en poids par rapport au poids total du bain,
• 30 à 40 % en poids de matériau polymérique par rapport au poids total du bain,
• le reste étant de l'eau.

34. Procédé selon la revendication 32 ou 33, **caractérisé en ce que** le rapport pondéral des pigments au liant total varie de 0,05 à 0,3, de préférence de 0,1 à 0,2, le liant total étant la somme du matériau polymérique et du liant de broyage.

35. Procédé selon l'une des revendications 32 à 34, **caractérisé en ce que** la réticulation est réalisée par chauffage dans un four thermique ou électrique, dans une étuve ou au moyen de rampes de lampes infra-rouge.

## Claims

1. An article comprising a conducting substrate, **characterised in that** it is covered, at least partly, by a continuous single layer coating, of a uniform thickness of at least 50 µm, resulting from the crosslinking of a crosslinkable coating formulation comprising:
- a pigment paste comprising at least one grinding binder, at least one pigment and, optionally, at least one filler, the pigment and the optional filler being dispersed in the grinding binder, and
- a polymer material containing at least one cationic resin selected from among epoxy resins; polyurethane and/or polyurea and/or poly(urethane-urea) resins; and acrylic resins, at least one preferably linear alkyl(C₆-C₁₂)amide and a least one crosslinking agent.

2. An article according to claim 1, **characterised in that** the alkylamide is an alkyl(C₈-C₁₀)amide.

3. An article according to claims 1 or 2, **characterised in that** the alkylamide is a 50/50 by weight mixture of N,N-dimethyl octanamide and N,N-dimethyl decanamide.

4. An article according to any of the previous claims, **characterised in that** the thickness of the coating layer varies from 50 µm to 200 µm.

5. An article according to claim 4, **characterised in that** the thickness of the coating layer varies from 100 µm to 180 µm.

6. An article according to any of the previous claims, **characterised in that** the filler contained in the pigment paste is selected from among barium carbonate, barium sulphate, kaolin, calcium carbonate, aluminium silicate, silica, magnesium carbonate, magnesium silicate, and mixtures of these.

7. An article according to any of claims 1 to 3, **characterised in that** the coating layer has a thickness equal to or greater than 150 µm, the filler is a silica, and the cationic resin of the polymer material is selected from among epoxy resins and polyurethane resins.

8. An article according to claim 7, **characterised in that** the silica is crystalline.

9. An article according to claim 7 or 8, **characterised in that** the cationic resin of the polymer material is selected from among epoxy resins and the said polymer material also contains a flexibilising agent.

10. An article according to one of claims 7 to 9, **characterised in that** the flexibilising agent comprises between 10 and 20% by weight, and preferably 15 to 20% by weight of the total weight of the polymer material.

11. An article according to any of the previous claims, **characterised in that** the epoxy resins are polyepoxides, and preferably polyepoxides with a 1,2-epoxide equivalence greater than one, and preferably about 2.

12. An article according to claim 11, **characterised in that** the polyepoxides are polyglycidyl ethers of cyclic polyols.

13. An article according to claim 11, **characterised in that** the polyepoxides are polyglycidyl ethers of polyphenols or polyglycidyl ethers of polyalcohols derived from cyclic polyalcohols.

14. An article according to one of claims 11 to 13, **characterised in that** the polyepoxides have an average molecular weight of at least 200, preferably from 200 to 2000, and more preferably from about 340 to 2000.

15. An article according to one of claims 11 to 14, **characterised in that** the polyepoxide chain is extended with the help of a chain extender.

16. An article according to any of the previous claims, **characterised in that** the polyurethane and/or polyurea and/or poly(urethane-urea) resins are the reaction products of a polyisocyanate and of a polymer compound containing an active hydrogen.

17. An article according to claim 16, **characterised in that** the polymer compound containing an active hydrogen is selected from among polyoxyalkylene ether polyols, polyalkylenepolyolamines, and mixtures of these.

18. An article according to any of the previous claims, **characterised in that** the pigment or pigments of the pigment paste are selected from among inorganic and organic pigments, preferably from among white pigments and black pigments, and mixtures of these.

19. An article according to claim 18, **characterised in that** the pigment or pigments of the pigment paste are inorganic pigments, and make up 25 to 50% by weight, and preferably 30 to 40% by weight of the total weight of the pigment paste.

20. An article according to claim 18, **characterised in that** the pigment or pigments of the pigment paste are organic pigments, and make up 1 to 5% by weight, and preferably 2 to 3% by weight of the total weight of the pigment paste.

21. An article according to any of the previous claims, **characterised in that** the grinding binder of the pigment paste is a material containing a quaternary ammonium group, that is obtained by the reaction:
(i) of a monoepoxide or a polyepoxide on
(ii) an amine
in conditions that are sufficient to create the quaternary ammonium group.

22. An article according to any one of claims 1 to 21, **characterised in that** the grinding binder of the pigment paste is a cationic resin derived from an epoxy resin and containing ternary sulphonium groups and alkylphenoxide groups.

23. An article according to any one of claims 1 to 21, **characterised in that** the grinding binder of the pigment paste is a cationic resin derived from an epoxy resin and containing ternary sulphonium groups and quaternary ammonium groups.

24. An article according to any of the previous claims, **characterised in that** the grinding binder accounts for 15 to 30% by weight, preferably 20 to 25% by weight of the total weight of the pigment paste.

25. An article according to any of the previous claims, **characterised in that** the weight ratio of the pigment paste to the polymer material varies from 1 to 4, preferably from 2.22 to 2.28.

26. An article according to any of the previous claims, **characterised in that** the conductive substrate is a metallic substrate.

27. An article according to claim 26, **characterised in that** the metallic substrate is a steel substrate, the steel being either raw, phosphated or zinc electroplated.

28. An article according to any of the previous claims, **characterised in that** the substrate is a part of an automotive vehicle exposed to wear from gravel.

29. An article according to claim 28, **characterized in that** the substrate is an engine cradle or a radiator support.

30. A pre-prepared mixture comprising the pigment paste and the polymer material as defined in one of the claims 1 to 29.

31. An electrophoresis bath that contains the pre-prepared mixture as defined in claim 29 and water.

32. A method for producing an article as defined according to any one of the claims 1 to 29, **characterised in that** it comprises the following steps:
- (a) preparing a bath of a crosslinkable coating composition comprising:
. a pigment paste comprising at least one grinding binder, at least one pigment, and optionally at least one filler,
. a polymer material containing at least one cationic resin selected from among epoxy resins, polyurethane resins, and acrylic resins, and at least one alkyl(C₆-C₁₂)amide, and
. an aqueous medium comprising water, and optionally a solvent,
- (b) obtaining a conducting substrate,
- (c) placing the substrate in the bath,
- (d) depositing a layer of coating by electrophoresis, with a thickness of at least 50 µm, and
- (e) crosslinking the deposited coating layer.

33. A method according to claim 32, **characterised in that** the bath of crosslinkable coating comprises:
. 3 to 10% by weight of pigment paste, preferably 5 to 8% by weight, and more preferably about 6% by weight compared with the total weight of the bath,
. 30 to 40% of polymer material compared with the total weight of the bath,
. the rest being water.

34. A method according to claim 32 or 33, **characterised in that** the weight ratio of pigments to the total binder varies from 0.05 to 0.3, preferably from 0.1 to 0.2, the total binder being the sum of the polymer material and the grinding binder.

35. A method according to one of the claims 32 to 34, **characterised in that** the crosslinking is carried out by heating in a thermal or electric oven, in a drying oven or using a row of infrared lamps.

## Patentansprüche

1. Artikel, der ein leitfähiges Substrat umfasst, **dadurch gekennzeichnet, dass** er wenigstens zum Teil von einer einschichtigen kontinuierlichen Beschichtung mit einer gleichmäßigen Dicke von wenigstens 50 µm bedeckt ist, die aus der Vernetzung einer vernetzbaren Beschichtungszusammensetzung resultiert, die Folgendes umfasst:
• eine Pigmentzusammensetzung, die wenigstens ein Mahlhilfsmittel, wenigstens ein Pigment und gegebenenfalls wenigstens einen Füllstoff umfasst, wobei das Pigment und der gegebenenfalls vorhandene Füllstoff in dem Mahlhilfsmittel dispergiert sind; und
• ein polymeres Material, das wenigstens ein kationisches Harz, das aus Epoxyharzen, Polyurethanharzen und/oder Polyharnstoffharzen und/oder Polyurethanharnstoffharzen sowie Acrylharzen ausgewählt ist, wenigstens ein Alkyl(C₆-C₁₂)amid, vorzugsweise ein lineares, und wenigstens ein Vernetzungsmittel enthält.

2. Artikel gemäß Anspruch 1, **dadurch gekennzeichnet, dass** das Alkylamid ein Alkyl(en-C₈-C₁₀)amid ist.

3. Artikel gemäß Anspruch 1 oder 2, **dadurch gekennzeichnet, dass** das Alkylamid ein Gemisch von 50/50 Gewichtsteilen N,N-Dimethyloctanamid und N,N-Dimethyldecanamid ist.

4. Artikel gemäß einem der vorstehenden Ansprüche, **dadurch gekennzeichnet, dass** die Dicke der Beschichtungsschicht von 50 µm bis 200 µm variiert.

5. Artikel gemäß Anspruch 4, **dadurch gekennzeichnet, dass** die Dicke der Beschichtungsschicht von 100 µm bis 180 µm variiert.

6. Artikel gemäß einem der vorstehenden Ansprüche, **dadurch gekennzeichnet, dass** der in der Pigmentzusammensetzung enthaltene Füllstoff aus Bariumcarbonat, Bariumsulfat, Kaolin, Calciumcarbonat, Aluminiumsilicat, Siliciumoxid, Magnesiumcarbonat, Magnesiumsilikat und ihren Gemischen ausgewählt ist.

7. Artikel gemäß einem der Ansprüche 1 bis 3, **dadurch gekennzeichnet, dass** die Beschichtungsschicht eine Dicke von größer oder gleich 150 µm hat, der Füllstoff ein Siliciumoxid ist und das kationische Harz des polymeren Materials aus Epoxyharzen und Polyurethanharzen ausgewählt ist.

8. Artikel gemäß Anspruch 7, **dadurch gekennzeichnet, dass** das Siliciumoxid kristallin ist.

9. Artikel gemäß Anspruch 7 oder 8, **dadurch gekennzeichnet, dass** das kationische Harz des polymeren Materials aus Epoxyharzen ausgewählt ist und das polymere Material außerdem einen Flexibilisator enthält.

10. Artikel gemäß einem der Ansprüche 7 bis 9, **dadurch gekennzeichnet, dass** der Flexibilisator in einer Menge von 10 bis 20 Gew.-%, vorzugsweise 15 bis 20 Gew.-%, vorhanden ist, bezogen auf das Gesamtgewicht des polymeren Materials.

11. Artikel gemäß einem der vorstehenden Ansprüche, **dadurch gekennzeichnet, dass** die Epoxyharze Polyepoxide sind, vorzugsweise Polyepoxide mit einer 1,2-Epoxid-Äquivalenz von über 1 und vorzugsweise ungefähr 2.

12. Artikel gemäß Anspruch 11, **dadurch gekennzeichnet, dass** die Polyepoxide Polyglycidylether von cyclischen Polyolen sind.

13. Artikel gemäß Anspruch 11, **dadurch gekennzeichnet, dass** die Polyepoxide Polyglycidylether von Polyphenolen oder Polyglycidylether von Polyalkoholen, die von cyclischen Polyalkoholen abgeleitet sind, sind.

14. Artikel gemäß einem der Ansprüche 11 bis 13, **dadurch gekennzeichnet, dass** die Polyepoxide ein mittleres Molekulargewicht von wenigstens 200, vorzugsweise 200 bis 2000 und besonders bevorzugt ungefähr 340 bis 2000 aufweisen.

15. Artikel gemäß einem der Ansprüche 11 bis 14, **dadurch gekennzeichnet, dass** die Kette der Polyepoxide mit Hilfe eines Kettenverlängerers verlängert ist.

16. Artikel gemäß einem der vorstehenden Ansprüche, **dadurch gekennzeichnet, dass** die Polyurethanharze und/oder Polyharnstoffharze und/oder Polyurethanharnstoffharze die Produkte der Reaktion eines Polyisocyanats und einer polymeren Verbindung, die ein aktives Wasserstoffatom enthält, sind.

17. Artikel gemäß Anspruch 16, **dadurch gekennzeichnet, dass** die polymere Verbindung, die ein aktives Wasserstoffatom enthält, aus Polyoxyalkylenetherpolyolen, Polyoxyalkylenpolyaminen und ihren Gemischen ausgewählt ist.

18. Artikel gemäß einem der vorstehenden Ansprüche, **dadurch gekennzeichnet, dass** das Pigment oder die Pigmente der Pigmentzusammensetzung aus mineralischen und organischen Pigmenten, vorzugsweise weißen Pigmenten und schwarzen Pigmenten, und ihren Gemischen ausgewählt sind.

19. Artikel gemäß Anspruch 18, **dadurch gekennzeichnet, dass** das Pigment oder die Pigmente der Pigmentzusammensetzung mineralische Pigmente sind und 25 bis 50 Gew.-% und vorzugsweise 30 bis 40 Gew.-% des Gesamtgewichts der Pigmentzusammensetzung ausmachen.

20. Artikel gemäß Anspruch 18, **dadurch gekennzeichnet, dass** das Pigment oder die Pigmente der Pigmentzusammensetzung organische Pigmente sind und 1 bis 5 Gew.-% und vorzugsweise 2 bis 3 Gew.-% des Gesamtgewichts der Pigmentzusammensetzung ausmachen.

21. Artikel gemäß einem der vorstehenden Ansprüche, **dadurch gekennzeichnet, dass** das Mahlhilfsmittel der Pigmentzusammensetzung eine Substanz ist, die eine quartäre Ammoniumgruppe enthält und die man durch die Reaktion:
(i) eines Monoepoxids oder Polyepoxids mit
(ii) einem Amin
unter Bedingungen, die ausreichen, um die quartäre Ammoniumgruppe zu erzeugen, erhält.

22. Artikel gemäß einem der Ansprüche 1 bis 21, **dadurch gekennzeichnet, dass** das Mahlhilfsmittel der Pigmentzusammensetzung ein kationisches Harz ist, das von einem Epoxyharz abgeleitet ist und tertiäre Sulfoniumgruppen sowie Alkylphenoxidgruppen enthält.

23. Artikel gemäß einem der Ansprüche 1 bis 21, **dadurch gekennzeichnet, dass** das Mahlhilfsmittel der Pigmentzusammensetzung ein kationisches Harz ist, das von einem Epoxyharz abgeleitet ist und tertiäre Sulfoniumgruppen sowie quartäre Ammoniumgruppen enthält.

24. Artikel gemäß einem der vorstehenden Ansprüche, **dadurch gekennzeichnet, dass** das Mahlhilfsmittel 15 bis 30 Gew.-%, vorzugsweise 20 bis 25 Gew.-%, des Gesamtgewichts der Pigmentzusammensetzung ausmacht.

25. Artikel gemäß einem der vorstehenden Ansprüche, **dadurch gekennzeichnet, dass** das Gewichtsverhältnis der Pigmentzusammensetzung zum polymeren Material von 1 bis 4, vorzugsweise 2,22 bis 2,28, variiert.

26. Artikel gemäß einem der vorstehenden Ansprüche, **dadurch gekennzeichnet, dass** das leitfähige Substrat ein metallisches Substrat ist.

27. Artikel gemäß Anspruch 26, **dadurch gekennzeichnet, dass** das metallische Substrat ein Substrat aus Stahl ist, wobei der Stahl blank, phosphatiert oder galvanisch verzinkt sein kann.

28. Artikel gemäß einem der vorstehenden Ansprüche, **dadurch gekennzeichnet, dass** das Substrat ein Teil eines Kraftfahrzeugs ist, das Steinschlag ausgesetzt ist.

29. Artikel gemäß Anspruch 28, **dadurch gekennzeichnet, dass** das Substrat ein Motorträger oder ein Kühlerträger ist.

30. Fertigmischung, die die Pigmentzusammensetzung und das polymere Material, wie sie gemäß einem der Ansprüche 1 bis 29 definiert sind, umfasst.

31. Elektrophoresebad, das die Fertigmischung gemäß Anspruch 30 und Wasser umfasst.

32. Verfahren zur Herstellung eines Artikels gemäß einem der Ansprüche 1 bis 29, **dadurch gekennzeichnet, dass** es die folgenden Schritte umfasst:
- (a) Herstellen eines Bades aus einer vernetzbaren Beschichtungszusammensetzung, umfassend:
• eine Pigmentzusammensetzung, die wenigstens ein Mahlhilfsmittel, wenigstens ein Pigment und gegebenenfalls wenigstens einen Füllstoff umfasst;
• ein polymeres Material, das wenigstens ein kationisches Harz, das aus Epoxyharzen, Polyurethanharzen und Acrylharzen ausgewählt ist, und wenigstens ein Alkyl(C₆-C₁₂)amid enthält; und
• ein wässriges Medium, das Wasser und gegebenenfalls ein Lösungsmittel umfasst;
- (b) Bereitstellen eines leitfähigen Substrats;
- (c) Eintauchen des Substrats in das Bad;
- (d) Abscheiden einer Beschichtungsschicht mit einer Dicke von wenigstens 50 µm durch Elektrophorese; und
- (e) Vernetzen der abgeschiedenen Beschichtungsschicht.

33. Verfahren gemäß Anspruch 32, **dadurch gekennzeichnet, dass** das Bad aus der vernetzbaren Beschichtungszusammensetzung Folgendes umfasst:
• 3 bis 10 Gew.-% Pigmentzusammensetzung, vorzugsweise 5 bis 8 Gew.-% und besonders bevorzugt ungefähr 6 Gew.-%, bezogen auf das Gesamtgewicht des Bades;
• 30 bis 40 Gew.-% polymeres Material, bezogen auf das Gesamtgewicht des Bades;
• Wasser als Rest.

34. Verfahren gemäß Anspruch 32 oder 33, **dadurch gekennzeichnet, dass** das Gewichtsverhältnis der Pigmente zum gesamten Bindemittel von 0,05 bis 0,3, vorzugsweise von 0,1 bis 0,2, variiert, wobei das gesamte Bindemittel die Summe des polymeren Materials und des Mahlhilfsmittels ist.

35. Verfahren gemäß einem der Ansprüche 32 bis 34, **dadurch gekennzeichnet, dass** die Vernetzung durch Erhitzen in einem Thermo- oder Elektroofen, in einem Trockenschrank oder mittels Infrarotlampenaggregaten erfolgt.
